# EUROPÄISCHE PATENTSCHRIFT

(11) **EP 1 166 049 B1**
(45) Veröffentlichungstag und Bekanntmachung des Hinweises auf die Patenterteilung: **13.10.2004**
(21) Anmeldenummer: 00929243.4
(22) Anmeldetag: 28.03.2000
(51) Int. Cl.: G01D 21/00, G06K 19/067

(54) **IDENTIFIZIERBARES ELEKTRISCHES BAUTEIL MIT VERFAHREN ZUR IDENTIFIKATION UND AUSWERTEEINHEIT**
IDENTIFIABLE ELECTRIC COMPONENT, METHOD OF IDENTIFICATION AND EVALUATION DEVICE
COMPOSANT ELECTRIQUE IDENTIFIABLE, PROCEDE D'IDENTIFICATION ET UNITE D'INTERPRETATION

(30) Priorität: 29.03.1999 DE 19914004
(43) Veröffentlichungstag der Anmeldung: 02.01.2002
(73) Patentinhaber: ROBERT BOSCH GMBH, 70442 Stuttgart (DE)
(72) Erfinder: FRITSCHE, Georg, D-33141 Hildesheim (DE); SCHMID, Helmut, D-31249 Hohenhameln (DE); SCHRIEFER, Frank, D-31199 Diekholzen (DE)
(86) Internationale Anmeldenummer: PCT/DE2000/000914
(87) Internationale Veröffentlichungsnummer: WO 2000/058694

(56) Entgegenhaltungen:
- EP-A- 0 437 697

## Beschreibung

Die Erfindung betrifft ein elektrishes Bauteil, ein Verfahren zur identifikation und eine Auswerteeinheit.

Es ist bekannt, elektrische Bauteile durch aufgebrachte Barcodes und/oder Typenbezeichnungen zu identifizieren. Zur weiteren Verarbeitung dieser Information durch ein elektrisches Gerät ist jedoch z.B. eine weitere manuelle Eingabe des Typs des elektrischen Bauteils erforderlich. Ferner ist es in der Computertechnik bekannt, Informationen über die Identität von Computerkomponenten über eine Schnittstelle abzufragen. Aus der US 4,487,181 ist ein Brennstoffzufuhrsystem in der Form einer Pumpe bekannt, bei der an dem Pumpengehäuse eine Aufzeichnung über die Daten der Pumpe während einer Testphase aufgezeichnet sind. Diese Testaufzeichnung ist in der Form eines Widerstandsnetzes ausgeführt, wobei die Werte der Widerstände Informationen über die Daten der Pumpe während der Testphase repräsentieren. Über eine Kabelverbindung ist die Übertragung zu einem Kontrollsystem möglich. In der EP-A2-437 697 ist eine Spannungsteilerkennung angedeutet.

Die Erfindung ist mit den unabhängigen Ansprüchen 1, 4, 12 gegeben.

Das erfindungsgemäße elektrische Bauteil hat demgegenüber den Vorteil, daß eine Information über die Identität des elektrischen Bauteils aus der Messung einer Spannung an einem Spannungsteiler erfolgt, der Teil eines Widerstandsnetzwerkes in dem elektrischen Bauteil ist. Dies ist insbesondere deshalb vorteilhaft, da die aus dem Spannungsteiler entnehmbare, geteilte Spannung von den Absolutwerten der Widerstände des Widerstandsnetzwerkes unabhängig ist und nur von dem Verhältnis der Widerstände des Spannungsteilers abhängt. Insbesondere eine Temperaturabhängigkeit der Widerstände fällt bei der Messung der Spannung heraus und kann somit nicht zu einer Fehlidentifikation des elektrischen Bauteils führen. Als weiterer Vorteil ist anzusehen, daß eine Spannungsmessung durch ein Meßgerät mit einem sehr hohen Innenwiderstand erfolgen kann und somit für die Messung nur sehr geringe Ströme erforderlich sind.

Weiterhin ist es vorteilhaft, das Widerstandsnetzwerk als eine Vielzahl von Parallelschaltungen von Serienschaltungen jeweils zweier ohmscher Widerstände auszuführen und jeweils zwischen den beiden in Serie geschalteten Widerständen eine Spannung abzugreifen und gegenüber einem festen Bezugspotential zu messen. Denn da aufgrund der Toleranzen der Widerstände und einer begrenzten Auflösung des Meßgerätes nicht beliebig viele, mögliche Spannungswerte zur Verfügung stehen, kann durch eine Anordnung einer Vielzahl von Serienschaltungen der Umfang der speicherbaren Informationen für die Identifikation des elektrischen Bauteils vergrößert werden. Weiterhin ist es vorteilhaft, daß die Werte der Widerstände des Widerstandsnetzwerkes in Abstufungen gewählt sind, so daß bei der vorgegebenen Referenzspannung nur Spannungswerte bis zur Referenzspannung meßbar sind, deren Toleranzbereiche jeweils disjunkt sind. Hierdurch ist es möglich, einen gemessenen Spannungswert in eindeutiger Weise einem theoretischen Spannungswert zuzuweisen, der für die nachfolgende Identifikation des elektrischen Bauteils verwertet wird.

Ferner ist es vorteilhaft, daß das elektrische Bauteil einen Eingang für eine Referenzspannung aufweist. Hierdurch ist eine Meßeinrichtung von einer Versorgungsspannung des elektrischen Bauteils unabhängig. Dies ist insbesondere dann sinnvoll, wenn das elektrische Bauteil zum Zeitpunkt der Identifikation noch nicht aktiviert ist und daher noch nicht mit einer Betriebsspannung versorgt wird. Außerdem kann möglicherweise die in dem elektrischen Bauteil anliegende Spannung schwanken, so daß eine Messung möglicherweise zu einer falschen Identifikation führen könnte. Wird die Referenzspannung von außen in das elektrische Bauteil eingegeben, so kann diese Spannung direkt durch eine Meßeinheit überprüft werden.

Weiterhin ist es vorteilhaft, ein Verfahren zur Identifikation des elektrischen Bauteils vorzusehen, bei dem die Spannung an mindestens einem Widerstand des Spannungsteilers gemessen und von der Auswerteeinheit eine Information ermittelt wird, die eine Identifikation des elektrischen Bauteils ermöglicht. Hierdurch wird die gemessene Spannung in ein weiterverarbeitbares Signal umgewandelt.

Es ist ferner vorteilhaft, die gemessene Spannung über ein Analog-Digital-Wandler in einen digitalen Code umzuwandeln. Hierdurch werden Meßfehler bereinigt, die durch Toleranzen der Widerstände oder Spannungsabfall an den Zuleitungen sowie Ungenauigkeit des Meßgerätes entstehen. Außerdem ermöglicht ein digitaler Code eine Weiterverarbeitung durch eine Recheneinheit.

Weiterhin ist es vorteilhaft, als Referenzspannung eine Gleichspannung zu verwenden, da im Gegensatz zur Wechselspannung bei einer Gleichspannung die Widerstandswerte nicht wie bei kapazitiven, beziehungsweise induktiven Lasten frequenzabhängig sind.

Weiterhin ist es vorteilhaft, daß der digitale Code des Analog-Digital-Wandlers an eine Recheneinheit weitergeleitet wird, die den digitalen Code mit gespeicherten digitalen Codes vergleicht und bei Übereinstimmung des ermittelten Codes mit einem gespeicherten digitalen Code den Typ der Vorrichtung aus der Speichereinheit abrufen und an eine Ausgabeeinheit beziehungsweise einen Datenausgang übermitteln kann. Eine Identifikation der Vorrichtung ist damit bereits in der Auswerteeinheit möglich, so daß ein Typ der Vorrichtung in der Ausgabeeinheit angezeigt oder an eine weitere Recheneinheit übermittelt werden kann.

Es ist ferner vorteilhaft, daß der digitale Code von der Auswerteeinheit direkt an eine zweite Recheneinheit weitergeleitet wird, wobei entweder die Identifikation der Vorrichtung bereits durch die Auswerteeinheit erfolgt oder durch die zweite Recheneinheit im Rückgriff auf eine zweite Speichereinheit erfolgt. Dabei ist es vorteilhaft, daß Daten für den Betrieb des elektrischen Gerätes durch die zweite Recheneinheit von der zweiten Speichereinheit geladen werden können. Eine manuelle Auswahl durch den Benutzer, welches elektrische Bauteil vorliegt oder die Eingabe eines speziellen Datenträgers in die zweite Speichereinheit, die nur Daten für den Betrieb des elektrischen Bauteils trägt, kann hierdurch vermieden werden. Ferner muß somit nur ein Medium für eine Produktpalette, in die verschiedene Varianten der elektrischen Bauteile verwendet werden, nur ein Medium für die Speichereinheit erstellt werden.

Dabei ist es vorteilhaft, daß in Abhängigkeit von der Identifikation des elektrischen Bauteils die für den Betrieb des elektrischen Bauteils erforderlichen Daten automatisch bei einer Verfügbarkeit in der zweiten Speichereinheit geladen werden.

Es ist weiterhin vorteilhaft, eine Auswerteeinheit mit einem Analog-Digital-Wandler vorzusehen, der die an dem elektrischen Bauteil gemessene Spannungen in einen digitalen Code umwandelt, da dieser durch eine Recheneinheit weiterverarbeitet werden kann. Weiterhin ist es vorteilhaft, die Auswerteeinheit mit einer Recheneinheit und einer Speichereinheit auszustatten, durch die der digitale Code einem vorher in der Speichereinheit abgelegten Typ der Vorrichtung zuweisbar ist; denn so ist direkt durch die Auswerteeinheit eine Anzeige des Typs der Vorrichtung oder eine Übermittlung zum Beispiel an eine weitere Recheneinheit, möglich.

### Zeichnungen

Figur 1 zeigt ein erfindungsgemäßes elektrisches Bauteil mit einer erfindungsgemäßen Auswerteeinheit,
Figur 2 zeigt ein erfindungsgemäßes elektrisches Bauteil mit einer anderen erfindungsgemäßen Auswerteeinheit,
Figur 3 zeigt ein erfindungsgemäßes elektrisches Bauteil in einem elektrischen Gerät, wobei das elektrische Bauteil mit einer erfindungsgemäßen Auswerteeinheit verbunden ist.
Figur 4 zeigt ein elektrisches Bauteil, das mit einer Auswerteeinheit in einem elektrischen Gerät verbunden ist.

### Beschreibung des Ausführungsbeispiels

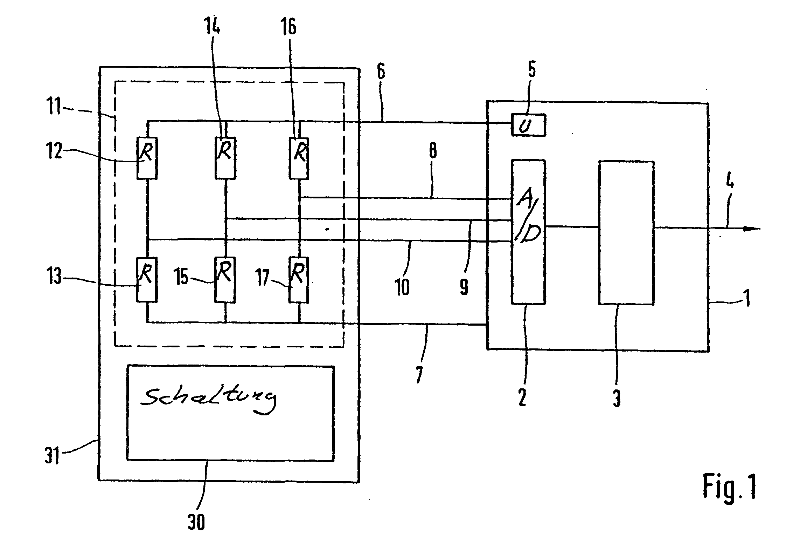

In Figur 1 ist ein elektrisches Bauteil 31 mit einer elektrischen Schaltung 30 dargestellt. Ferner verfügt das elektrische Gerät 31 über ein Widerstandsnetzwerk 11, das aus einem ersten Widerstand 12, einem zweiten Widerstand 13, einem dritten Widerstand 14, einem vierten Widerstand 15, einem fünften Widerstand 16 und einem sechsten Widerstand 17 besteht. Das elektrische Gerät 31 ist mit einer Auswerteeinheit 1 verbunden. Die Verbindung erfolgt über eine Referenzspannungsleitung 6, eine erste Datenleitung 8, eine zweite Datenleitung 9, eine dritte Datenleitung 10 und eine Masseleitung 7. Die Auswerteeinheit 1 verfügt über eine Referenzspannungsquelle 5, einen Analog-Digital-Wandler 2, eine Schnittstelle 3 und einen Datenausgang 4. In dem Widerstandsnetzwerk 11 wird der erste Widerstand 12, der dritte Widerstand 14 und der fünfte Widerstand 16 jeweils mit einem Anschluß mit der Referenzspannungsleitung 6 und damit mit der Referenzspannungsquelle 5 in der Auswerteeinheit 1 verbunden. Der erste Widerstand 12 ist mit seinem anderen Anschluß sowohl mit dem zweiten Widerstand 13 als auch mit der dritten Datenleitung 10 verbunden. Der dritte Widerstand 14 ist mit seinem anderen Ausgang sowohl mit dem vierten Widerstand 15 als auch mit der zweiten Datenleitung 9 verbunden. Der fünfte Widerstand 16 ist mit seinem anderen Ausgang sowohl dem sechsten Widerstand 17 als auch mit der ersten Datenleitung 8 verbunden. Die drei Datenleitungen 8, 9, 10 führen in jeweils einen Eingang des Analog-Digital-Wandlers 2 in der Auswerteeinheit 1. Der zweite Widerstand 13, der vierte Widerstand 15 und der sechste Widerstand 17 sind alle mit der Masseleitung 7 verbunden, mit der auch die Auswerteeinheit 1 verbunden ist. Alle in dem Widerstandsnetzwerk verwendeten Widerstände sind dabei Widerstände mit zwei Anschlüssen, die beispielsweise als Kohlefilmwiderstände, als SMD-Bauteile oder als Mikrostrukturbauteile in einer miniaturisierten Halbleiterschaltung ausgeführt sind.

Das Widerstandsnetz 11 ist von der elektrischen Baugruppe 30 des elektrischen Bauteils 31 unabhängig. Die Funktionsweise der elektrischen Baugruppe ist dabei beliebig. Dateneingänge, Datenausgänge und eine Spannungsversorgung sind in der Figur 1 nicht dargestellt. Die elektrische Baugruppe kann dabei zum Beispiel passive Bauelemente, Halbleiterelemente, Rechen- und Speichereinheiten sowie Anzeigeeinheiten und Aktoren umfassen.

In einem ersten Verfahrensschritt wird nun die Auswerteeinheit 1 mit dem elektrischen Bauteil, mit dem Widerstandsnetz 11 über die Referenzspannungsleitung 6, die erste, zweite und dritte Datenleitung 8, 9, 10 und die Masseleitung 7 in Verbindung gebracht. Diese Verbindung kann durch eine Steckerverbindung hergestellt werden, bei der entweder die Auswerteeinheit mit dem elektrischen Bauteil in einer direkten Verbindung steht oder bei der eine Drahtverbindung zwischen der Auswerteeinheit 1 und dem elektrischen Bauteil 31 vorhanden ist. Außerdem ist es möglich, die Auswerteeinheit 1 und das elektrische Bauteil 31 auf einer Leiterplatte vorzusehen und somit die Verbindung jeweils über Leiterplattenbahnen zu schaffen. Dabei kann die Verbindung sowohl dauerhaft sein als auch unterbrechbar, wie es insbesondere bei einer Steckerverbindung möglich ist. In einem zweiten Verfahrensschritt wird nun von der Referenzspannungsquelle 5 über die Referenzspannungsleitung 6 an das Widerstandsnetzwerk 11 angelegt. Dabei liegt die Referenzspannung jeweils an dem ersten und zweiten Widerstand 12, 13, an dem dritten und vierten Widerstand 14, 15 und an dem fünften und sechsten Widerstand 16, 17 aufgrund der Parallelschaltung an, wobei die jeweils zwei Widerstände jeweils einen Spannungsteiler bilden. Wie nun eine Information an die Auswerteeinheit in einem dritten Verfahrensschritt übermittelbar ist, wird nun anhand des ersten und zweiten Widerstands 12, 13 erläutert. Die Spannung, die an dem Anschluß der dritten Datenleitung zwischen dem ersten Widerstand 12 und dem zweiten Widerstand 13 zum Beispiel gegenüber der Masseleitung 7, anliegt, ist durch das Verhältnis des ersten Widerstandes 12 zu dem zweiten Widerstand 13 gegeben. Liegt nun eine Referenzspannung von 10Volt an, und hat zum Beispiel der erste Widerstand den Wert 100Ohm, der zweite Widerstand 13 den Wert 300Ohm, so fällt offensichtlich ¾ der Spannung an dem zweiten Widerstand 13 ab. Gegenüber einem Bezugspotential Masse liegt damit an dem zweiten Widerstand 13 eine Spannung von 7,5Volt an. Der Wert von 7,5Volt wird durch den Analog-Digital-Wandler in einem dritten Verfahrensschritt gemessen und in einen digitalen Code umgewandelt. Der Analog-Digital-Wandler ist dabei als eine Spannungsmaßeinheit mit einem hohen Innenwiderstand, vorzugsweise größer als 1 MΩ ausgeführt. Zum Beispiel kann dem Wert 7,5Volt als digitaler Code die Zahl 3 zugewiesen werden. Weitere mögliche Widerstandskombinationen für den ersten Widerstand 12 und dem zweiten Widerstand 13 können dann zum Beispiel sein, daß der erste Widerstand 12 den Wert 300Ohm und der zweite Widerstand 13 den Wert 100Ohm oder daß beide Widerstände den Wert 200Ohm besitzen. Nimmt man nun an, daß die Widerstände eine Toleranz von 5% aufweisen, so ist für den Fall, daß der erste Widerstand 12 ein Wert von 300Ohm, der zweite Widerstand 13 ein Wert von 100Ohm hat, an der dritten Datenleitung 10 bei einer Referenzspannung von 10Volt eine Spannung in einem Bereich von 2,3 bis 2,7Volt meßbar. Haben beide Widerstände den Wert 200Ohm, so ist eine Spannung von 4,8 bis 5,2Volt meßbar. Hat der dritte Widerstand 13 den Wert 300Ohm und der erste Widerstand 12 den Wert 100Ohm, so ist eine Spannung im Bereich von 7,3 bis 7,7Volt meßbar. In diesem Ausführungsbeispiel wird nun durch den Analog-Digital-Wandler alle im Bereich 2,3 bis 2,7 gemessenen Spannungen ein digitaler Wert 1, allen im Bereich von 4,8 bis 5,2Volt gemessenen Spannungen ein Wert 2 und, wie bereits oben beschrieben, allen im Bereich 7,3 bis 7,7Volt gemessenen Spannungen ein Wert 3 zugewiesen. Da andere Widerstandskombinationen in diesem Ausführungsbeispiel nicht zugelassen sind, wird bei allen anderen durch den Analog-Digital-Wandler gemessenen Spannungen ein Fehler gemeldet. Indem die Toleranzbereiche um die einzelnen Spannungswerte von 2,5, 5,0 und 7,5Volt disjunkt sind, ist es somit einerseits möglich, einen Fehler zu erkennen und andererseits eine eindeutige Zuordnung eines Spannungswertes zu einem Code durchzuführen. Daher ist es ebenfalls möglich, die Referenzspannung als Bezugspotential zu wählen. Der Toleranzbereich wird mindestens so groß gewählt, daß alle durch die Fehler der Widerstände möglichen Meßwerte mit Sicherheit innerhalb dieses Toleranzbereiches liegen.

Da sowohl an den dritten Widerstand 14 und den vierten Widerstand 15, wie auch an den fünften Widerstand 16 und den sechsten Widerstand 17 gegebenenfalls in gleicher Weise wie an den ersten Widerstand 12 und den zweite Widerstand 13 die Referenzspannung von 10Volt angelegt wird, ist zwischen den beiden Widerständen über die zweite Datenleitung 9 beziehungsweise über die erste Datenleitung 8 eine geteilte Spannung abgreifbar. Bei einer gleichen, möglichen Widerstandswahl ist auch für die erste und zweite Datenleitung 8, 9 in gleicher Weise eine Eingangsspannung in den Analog-Digital-Wandler 2 möglich. Für jede der drei Datenleitungen verfügt der Analog-Digital-Wandler über einen eigenen Eingang. Der Analog-Digital-Wandler, der die drei Datenleitungen entweder zeitgleich oder nacheinander abfragt, fügt nun die für jede Datenleitung ermittelte Zahl zu einem digitalen Code zusammen, der aus drei Stellen besteht, wobei jede Stelle entweder den Wert 1, 2 oder 3 haben kann, zusammen. Der digitale Code wird in einem vierten Verfahrensschritt an eine Schnittstelle 3 übermittelt und ist über einen Datenausgang 4 aus der Auswerteeinheit abgreifbar. Die Schnittstelle 3 kann dabei eine im Computerbereich übliche Schnittstelle, zum Beispiel eine serielle oder parallele Schnittstelle, oder eine im Kraftfahrzeug übliche Schnittstelle sein, zum Beispiel eine Schnittstelle zu einem CAN-Bus. Diese Übermittlung stellt den vierten Verfahrensschritt dar. Der aus dem Datenausgang entnommene Code kann nun durch eine nicht dargestellte externe Einheit zur Information eines Benutzers verwendet werden, der über die Identität des elektrischen Bauteils 31 informiert wird. Ferner kann eine externe Einheit darüber informiert werden, welches elektrische Bauteil 31 vorliegt, wobei der externen Einheit hierdurch ermöglicht wird, gezielt auf das elektrische Bauteil 31 zuzugreifen, das elektrische Bauteil 31 zu steuern, Informationen von dem elektrischen Bauteil 31 auszulesen oder eine Software zu laden, die erst den Betrieb des elektrischen Bauteils 31 durch die externe Einheit ermöglicht. Die externe Einheit ist vorzugsweise ein Navigationsgerät und/oder ein Radio und/oder eine mobile Kommunikationseinheit in einem Kraftfahrzeug. Das elektrische Bauteil ist dabei vorzugsweise ein Bauteil, das in einer Vielzahl der genannten Geräte verwendet wird, das jedoch in Abhängigkeit von seiner Verwendung in den verschiedenen Geräten eine spezielle Software benötigt, beziehungsweise das Gerät benötigt diese spezielle Software zum Betrieb des elektrischen Bauteils 31.

Die in der Figur 1 dargestellte Anzahl von Widerständen ist dabei als nur eine mögliche Ausführungsform anzusehen. Es ist ferner möglich, nur eine einzige Serienschaltung von zwei Widerständen vorzusehen, bei denen zwischen den beiden Widerständen eine Meßspannung abgegriffen und in vorteilhafter Weise in den Eingang eines Analog-Digital-Wandlers geführt wird. Weiterhin ist es auch möglich, die Anzahl der parallel geschalteten Spannungsteiler in der Form von jeweils zwei in Serie geschalteten Widerständen in dem Widerstandsnetzwerk 11 zu erhöhen. Für jede weitere Serienschaltung ist ebenfalls eine Datenleitung hinzuzufügen, die den Eingang einer Meßeinheit, vorzugsweise eines Analog-Digital-Wandlers, mit einem Punkt zwischen den jeweils zwei Widerständen verbindet. Dabei ist es ferner möglich, daß die einzelnen Widerstände, zum Beispiel der erste Widerstand 12 selbst aus einer Vielzahl von in Serie oder parallel geschalteten Widerständen gebildet wird. Zum Beispiel kann bei dem genannten Beispiel der Widerstand von 300Ohm durch drei in Serie geschaltete 100Ohm-Widerstände gebildet werden, wobei jedoch ein möglicherweise geänderter Toleranzbereich zu beachten ist. Weiterhin ist es möglich, zum Beispiel den ersten Widerstand 12 zu überbrücken. Am Widerstand 13 fällt dann die gesamte Referenzspannung gegenüber Masse ab. Ebenso ist es möglich, den zweiten Widerstand 13 zum Beispiel durch eine Überbrückung zu ersetzen. In diesem Fall liegt an der dritten Datenleitung 10 das Massepotential an, die gesamte Spannung fällt an dem vorhandenen, ersten Widerstand 12 ab. Somit ist es möglich, daß sowohl die Referenzspannung in voller Höhe als auch Masse an einen Eingang des Analog-Digital-Wandlers anlegbar ist. Hierdurch kann die Anzahl von möglichen, durch das Verhältnis zum Beispiel des ersten Widerstandes 12 zu dem zweiten Widerstand 13 vorgebbaren Spannungswerte vergrößert werden.

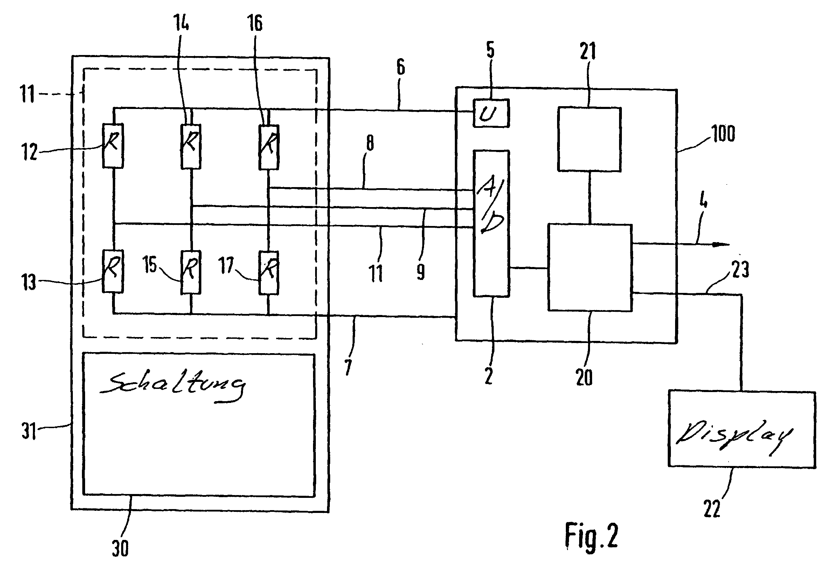

In der Figur 2 ist ebenfalls ein elektrisches Bauteil 31 mit einer Auswerteeinheit 100 verbunden. Hier und in den folgenden Figuren bezeichnen gleiche Bezugszeichen auch gleiche Komponenten. Die Auswerteeinheit 100 in Figur 2 unterscheidet sich von der Auswerteeinheit 1 in Figur 1 dadurch, daß der Analog-Digital-Wandler 2 mit einer ersten Recheneinheit 20 verbunden ist, die wiederum auf eine erste Speichereinheit 21 zugreifen kann. Die Recheneinheit 20 verfügt über einen ersten Datenausgang 4 und einen zweiten Datenausgang 23. Der zweite Datenausgang 23 ist wiederum mit einer Anzeigeeinheit 22 verbunden. Der von dem Analog-Digital-Wandler ermittelte Code bezüglich der Identifikation des elektrischen Bauteils 31 wird in der Auswerteeinheit 100 an die Recheneinheit 20 weitergeleitet. Die erste Recheneinheit 20 greift nun auf die erste Speichereinheit 21 zu, und vergleicht den von dem Analog-Digital-Wandler 2 erhaltenen digitalen Code mit den in der ersten Speichereinheit 21 abgelegten digitalen Codes. Zu den in der Speichereinheit 21 abgelegten digitalen Codes ist ein Typ des elektrischen Bauteils dort gespeichert. Wird nun von der ersten Recheneinheit 20 ein dem von dem Analog-Digital-Wandler 2 entsprechenden übermittelten digitalen Code in der ersten Speichereinheit 21 gefunden, so ruft die Recheneinheit 20 den entsprechenden Typ des elektrischen Bauteils 31 aus der ersten Speichereinheit ab. Der Typ des elektrischen Bauteils wird nunmehr über den ersten Datenausgang 4 in gleicher Weise wie in der Figur 1 beschrieben zum Beispiel an eine externes Gerät weitergeleitet. Ebenfalls ist es möglich, die Information über den Typ des elektrischen Bauteils an eine Ausgabeeinheit 22 weiterzuleiten. Die Ausgabe 22 kann zum Beispiel als eine Anzeigeeinheit ausgeführt sein, in der einem Benutzer der Typ des elektrischen Bauteils 31 angezeigt wird.

Die erste Recheneinheit 20 ist dabei vorzugsweise als ein Mikroprozessor oder ein Mikrocontroller ausgeführt. Die erste Speichereinheit 21 ist vorzugsweise ein Halbleiterbaustein, in dem Zuordnungen digitaler Codes zu verschiedenen Typen elektrischer Bauteile 31 zugewiesen sind. Die erste Speichereinheit 21 ist dabei zum Beispiel als ein EEPROM ausgeführt.

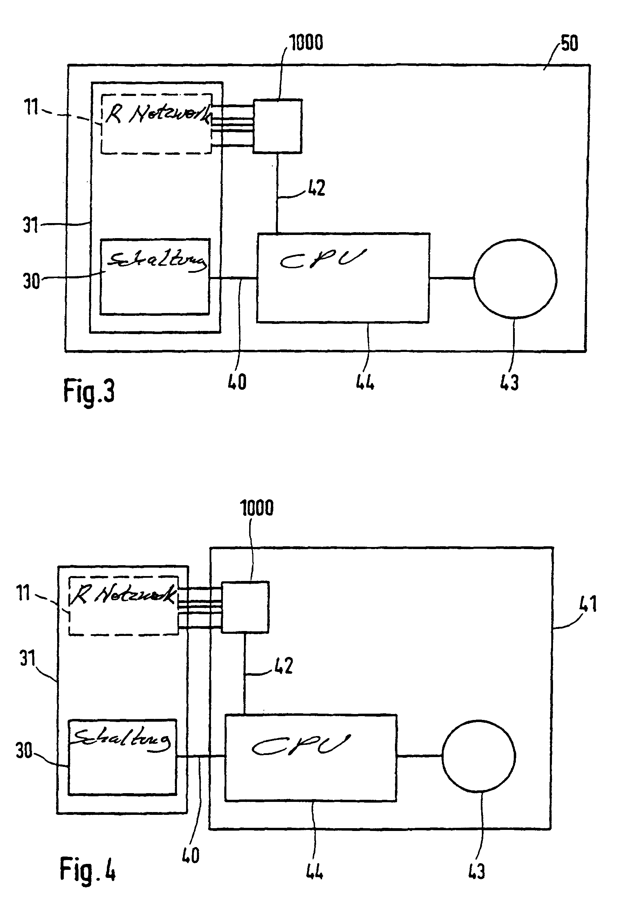

In Figur 3 ist ein elektrisches Gerät 50 dargestellt, das über zumindest ein elektrisches Bauteil 31 verfügt, das in erfindungsgemäßer Weise ausgeführt und, wie in den Figuren 1 und 2 beschrieben, mit einer Auswerteeinheit 1000 verbunden ist. Die Auswerteeinheit 1000 kann dabei wie die Auswerteeinheit 1 in Figur 1 oder wie die Auswerteeinheit 100 in Figur 2 ausgeführt sein. Der Auswerteeinheit 1000 ist über eine Datenverbindung 42 mit einer Zentraleinheit 44 des elektrischen Geräts 50 verbunden. Die Zentraleinheit 44 ist wiederum mit einer zweiten Speichereinheit 43 verbunden. Ebenfalls ist die Zentraleinheit 44 über eine Datenverbindung 40 mit dem elektrischen Gerät 31 insbesondere zumindest einer elektrischen Baugruppe 30 des elektrischen Gerätes 31 verbunden.

Von der Auswerteeinheit 1000 wird nun über den in den Figur 3 nicht eingezeichneten Datenausgang 4 über die Datenverbindung 42 eine Information über die Identität des elektrischen Bauteils 31 weitergeleitet. Bei der Ausführung der Auswerteeinheit 1000 nach Art der Auswerteeinheit 1 ist dies ein von dem Analog-Digital-Wandler ermittelter digitaler Code. Wird die Auswerteeinheit 1000 nach Art der Auswerteeinheit 100 in Figur 2 ausgeführt, so wird von der ersten Recheneinheit 20 an die Zentraleinheit 44 direkt der Typ des elektrischen Bauteils 31 übermittelt. Dieser kann zum Beispiel als Zahlenfolge oder als ein Name der Vorrichtung in der Form eines Textstrings übergeben werden. Ist die Auswerteeinheit 1000 als Auswerteeinheit 100 wie in Figur 2 ausgeführt, so muß die Zentraleinheit 44 keine Kenntnis davon mehr haben, wie das spezielle Widerstandsnetzwerk 11 ausgeführt ist, beziehungsweise wie die Identitätsinformation des elektrischen Bauteils ermittelt wurde. In der Zentraleinheit 44 kann nun auf die zweite Speichereinheit 43 zugegriffen werden, von der in Abhängigkeit von der Identität des elektrischen Bauteils 31 Daten für den Betrieb des elektrischen Bauteils in die Zentraleinheit 44 geladen werden. Diese Daten, vorzugsweise ein Programm zur Steuerung des elektrischen Bauteils, ermöglichen es nun, daß die Zentraleinheit 44 über die Datenverbindung 40 das elektrische Bauteil, speziell zumindest eine elektrische Baugruppe 30 des elektrischen Bauteils 31, steuern kann und oder Informationen von dem elektrischen Bauteil 31 über die Datenverbindung 40 erhalten kann. Die Datenverbindungen 40 und 42 sind dabei zum Beispiel als Kabel ausgeführt. Für den Fall, daß die Zentraleinheit 44 und das elektrische Bauteil 31 mit der elektrischen Baugruppe auf einer Leiterplatte angeordnet sind, können die Datenverbindungen 40 und 42 auch als Leiterbahnen ausgeführt sein. Die zweite Speichereinheit 43 kann wie die erste Speichereinheit 31 als ein Halbleiterbaustein ausgeführt sein, ist vorzugsweise jedoch als eine Speichereinheit mit einem wechselbaren Speichermedium ausgeführt. Die Speichereinheit 43 ist dann vorzugsweise als ein Laufwerk für einen magnetischen und/oder optischen Datenträger, wie zum Beispiel Diskette, CD oder magneto-optischer Datenträger, ausgeführt. In der Speichereinheit 43 stehen dabei vorzugsweise Daten für den Betrieb verschiedener elektrischer Bauteile 31 zur Verfügung, so daß ein Wechsel des Datenträgers in der zweiten Speichereinheit 43 auch bei einer Verwendung unterschiedlicher elektrischer Bauteile 31 in einem elektrischen Gerät 50 nicht erforderlich ist. Weiterhin ist es vorgesehen, das Laden von Daten von der zweiten Speichereinheit in die Zentraleinheit 44 erst dann oder automatisch dann auszuführen, wenn ein Speichermedium in der zweiten Speichereinheit 43 zur Verfügung steht, daß Daten für das von der Auswerteeinheit 1000 ermittelte elektrische Bauteil 31 enthält.

Die Zentraleinheit 44 ist dabei vorzugsweise als eine Recheneinheit mit einem nicht eingezeichneten Speicher ausgeführt. Eine Spannungsversorgung der einzelnen Komponenten wie Datenein- und -ausgänge des elektrischen Gerätes 50 sind in der Figur 3 nicht eingezeichnet. Das elektrische Gerät 50 ist dabei zum Beispiel ein Fahrzeugnavigationssystem, das über eine GPS-Antenne, eine Eingabeeinheit, eine Ausgabeeinheit in der Form einer Bildschirmanzeige und/oder einer akustischen Ausgabe sowie einer gespeicherten digitalen Straßenkarte verfügt.

In der Figur 4 ist ein elektrisches Gerät 41 dargestellt, das mit einem außerhalb des Gehäuses des elektrischen Gerätes 41 verbundenen elektrischen Bauteils 31 ausgeführt ist. Das elektrische Bauteil 31 kann nun zum Beispiel bei der Verwendung in einem Fahrzeug an einer beliebigen Stelle des Fahrzeugs angeordnet und über eine Drahtverbindung mit dem elektrischen Gerät 41 verbunden sind. Die Funktionsweise entspricht im übrigen dem in der Figur 3 dargestellten Aufbau.

## Patentansprüche

1. Elektrisches Bauteil (31) mit außen zugänglichen elektrischen Kontakten, wobei das elektrische Bauteil über ein Widerstandsnetzwerk (11) verfügt, das mit den elektrischen Kontakten in Verbindung steht, wobei das Widerstandsnetzwerk zu einer Identifikation des elektrischen Bauteils dient, **dadurch gekennzeichnet, dass** das Widerstandsnetzwerk (11) aus einer Vielzahl von Parallelschaltungen von Serienschaltungen jeweils zweier Ohmscher Widerstände bestehend ist, dass jeweils eine zwischen den jeweils zwei Widerständen gegen ein Bezugspotential, insbesondere Masse, gemessene Spannung über die elektrischen Kontakte (6, 7, 8, 9, 10) nach außen abgreifbar ist und dass das elektrische Bauteil (31) durch eine Messung der einzelnen Spannungen identifizierbar ist.

2. Elektrisches Bauteil nach Anspruch 1, **dadurch gekennzeichnet, dass** die Werte der Widerstände des Widerstandsnetzwerkes in Abstufungen gewählt sind, dass nur Spannungswerte bis zu dem Wert der Referenzspannung meßbar sind und dass die Toleranzbereiche der Spannungswerte jeweils disjunkt sind.

3. Elektrisches Bauteil nach einem der vorhergehenden Ansprüche, **dadurch gekennzeichnet, dass** das elektrische Bauteil einen Eingang (6) für eine Referenzspannung aufweist und der Eingang mit dem Widerstandsnetzwerk (11) verbunden ist.

4. Verfahren zur Identifikation eines elektrischen Bauteils (31), wobei in einem ersten Verfahrensschritt eine Auswerteeinheit (1) mit einem elektrischen Bauteil, das über ein Widerstandsnetz verfügt, über elektrische Kontakte in Verbindung gebracht wird, **dadurch gekennzeichnet, dass** eine elektrische Referenzspannung jeweils an eine Vielzahl in dem elektrischen Bauteil befindlicher Spannungsteiler angelegt wird, dass von der Auswerteeinheit jeweils eine anliegende Spannung an den Widerständen der Spannungsteiler gemessen wird und dass von der Auswerteeinheit in Abhängigkeit von den gemessenen Spannungen eine Information ausgegeben wird, durch die eine Identifikation des elektrischen Bauteils ermöglicht wird.

5. Verfahren nach Anspruch 4, **dadurch gekennzeichnet, dass** einer gemessene Spannung über einen Analog-Digital-Wandler ein digitaler Code zugewiesen wird, der für die anschließende Identifikation des elektrischen Bauteils verwendet wird.

6. Verfahren nach Anspruch 5, **dadurch gekennzeichnet, dass** der von dem Analog-Digital-Wandler ermittelte digitale Code an eine Schnittstelle geleitet und über einen Datenausgang ausgegeben wird.

7. Verfahren nach einem der Ansprüche 5-6, **dadurch gekennzeichnet, dass** der digitale Code an eine erste Recheneinheit weitergeleitet wird, die auf eine erste Speichereinheit zugreifen kann, in der eine Zuordnung des Ausgangssignals zu einer bestimmten Vorrichtung abgelegt wird und dass die erste Recheneinheit an einen Datenausgang und/oder eine Ausgabeeinheit übermittelt, welche bestimmte Vorrichtung vorliegt.

8. Verfahren nach einem der Ansprüche 5-7, **dadurch gekennzeichnet, dass** der digitale Code an eine zweite Recheneinheit weitergeleitet wird, die auf eine zweite Speichereinheit zugreift, von der Daten für den Betrieb des elektrischen Gerätes durch die Recheneinheit geladen werden.

9. Verfahren nach einem der Ansprüche 4-8, **dadurch gekennzeichnet, dass** die Referenzspannung von der Auswerteeinheit zur Verfügung gestellt wird.

10. Verfahren nach einem der Ansprüche 4-9, **dadurch gekennzeichnet, dass** als Referenzspannung eine Gleichspannung verwendet wird.

11. Verfahren nach einem der Ansprüche 4-10, **dadurch gekennzeichnet, dass** das Verhältnis der an einem Widerstand gemessenen Spannung zu der Referenzspannung durch das Verhältnis der Widerstände in dem Spannungsteiler gegeben wird.

12. Auswerteeinheit (1) durchführund das Verfahren nach einem der Ansprüche 4-11 mit einem Analog-Digital-Wandler (2) einem Dateneingang und mindestens einem Datenausgang, **dadurch gekennzeichnet, dass** die Auswerteeinheit (2) mit einem elektrischen Bauteil (31) über den Dateneingang über elektrische Kontakte verbunden ist (7, 8, 9, 10) und durch den Analog-Digital-Wandler (2) der gemessenen Spannungen ein digitaler Code zuweisbar ist.

13. Auswerteeinheit nach Anspruch 12, **dadurch gekennzeichnet, dass** in der Auswerteeinheit (1) eine Spannungsquelle (5) für die Referenzspannung angeordnet ist.

14. Auswerteeinheit nach einem der Ansprüche 12-13, **dadurch gekennzeichnet, dass** die Auswerteeinheit (1) über eine Recheneinheit (20) und eine Speichereinheit (21) verfügt, durch die der digitale Code einem vorher in der Speichereinheit abgelegten Typ der Vorrichtung (11) zuweisbar ist.

15. Auswerteeinheit nach einem der Ansprüche 12-14, **dadurch gekennzeichnet, dass** eine Anzeigeeinheit (22) an die Auswerteeinheit (1) angeschlossen ist, die von der Recheneinheit (20) steuerbar ist und auf der anzeigbar ist, welcher Typ der Vorrichtung identifiziert ist.

16. Auswerteeinheit nach einem der Ansprüche 12-15, **dadurch gekennzeichnet, dass** die Auswerteeinheit mit einer zweiten Recheneinheit (44) verbunden ist, die mit einer zweiten Speichereinheit (43) verbunden ist, von der in Abhängigkeit von dem durch die Auswerteeinheit (1) ermittelten digitalen Code Daten für den Betrieb des elektrischen Geräts (31) ladbar sind.

## Claims

1. Electrical component (31) having externally accessible electrical contacts, where the electrical component has a resistor network (11) which is connected to the electrical contacts, where the resistor network is used for identifying the electrical component, **characterized in that** the resistor network (11) comprises a multiplicity of parallel circuits comprising series circuits containing two respective non-reactive resistors, **in that** a respective voltage, measured between the two respective resistors against a reference-earth potential, particularly earth, across the electrical contacts (6, 7, 8, 9, 10) can be tapped off externally, and **in that** the electrical component (31) can be identified by measuring the individual voltages.

2. Electrical component according to Claim 1, **characterized in that** the values of the resistors in the resistor network are chosen in degrees, **in that** only voltage values up to the value of the reference voltage can be measured, and **in that** the tolerance ranges of the voltage values are respectively disjunct.

3. Electrical component according to one of the preceding claims, **characterized in that** the electrical component has an input (6) for a reference voltage, and the input is connected to the resistor network (11).

4. Method for identifying an electrical component (31), where a first method step involves an evaluation unit (1) being connected to an electrical component, which has a resistor network, using electrical contacts, **characterized in that** an electrical reference voltage is respectively applied to a multiplicity of voltage dividers which are in the electrical component, **in that** the evaluation unit measures a respective applied voltage across the resistors in the voltage dividers, and **in that** the evaluation unit takes the measured voltages as a basis for outputting an information item which allows the electrical component to be identified.

5. Method according to Claim 4, **characterized in that** a measured voltage is assigned a digital code using an analogue/digital converter, said digital code being used for subsequently identifying the electrical component.

6. Method according to Claim 5, **characterized in that** the digital code ascertained by the analogue/digital converter is routed to an interface and is output via a data output.

7. Method according to one of Claims 5-6, **characterized in that** the digital code is forwarded to a first processor, which can access a first memory unit in which an association between the output signal and a particular apparatus is stored, and **in that** the first processor transmits which particular apparatus is present to a data output and/or to an output unit.

8. Method according to one of Claims 5-7, **characterized in that** the digital code is forwarded to a second processor, which accesses a second memory unit from which the processor loads data for operating the electrical appliance.

9. Method according to one of Claims 4-8, **characterized in that** the reference voltage is provided by the evaluation unit.

10. Method according to one of Claims 4-9, **characterized in that** the reference voltage used is a DC voltage.

11. Method according to one of Claims 4-10, **characterized in that** the ratio of the voltage measured across a resistor to the reference voltage is given by the ratio of the resistors in the voltage divider.

12. Evaluation unit (1) carrying out the method according to one of Claims 4-11, having an analogue/digital converter (2), a data input and at least one data output, **characterized in that** the evaluation unit (1) is connected to an electrical component (31) via the data input using electrical contacts (7, 8, 9, 10), and the analogue/digital converter (2) can assign a digital code to the voltages measured.

13. Evaluation unit according to Claim 12, **characterized in that** the evaluation unit (1) contains a voltage source (5) for the reference voltage.

14. Evaluation unit according to one of Claims 12-13, **characterized in that** the evaluation unit (1) has a processor (20) and a memory unit (21), which can assign the digital code to a type of apparatus (11) which is stored in the memory unit beforehand.

15. Evaluation unit according to one of Claims 12-14, **characterized in that** a display unit (22) is connected to the evaluation unit (1), said display unit being able to be controlled by the processor (20) and being able to display what type of apparatus has been identified.

16. Evaluation unit according to one of Claims 12-15, **characterized in that** the evaluation unit is connected to a second processor (44), which is connected to a second memory unit (43) from which data for operating the electrical appliance (31) can be loaded on the basis of the digital code ascertained by the evaluation unit (1).

## Revendications

1. Composant électrique (31) comprenant des contacts électriques accessibles de l'extérieur, et disposant d'un réseau de résistances (11) connecté aux contacts électriques, et qui sert à identifier le composant électrique,
**caractérisé en ce que**
le réseau de résistances (11) est composé d'une pluralité de circuits en parallèle de circuits en série de deux conducteurs ohmiques chacun, une tension mesurée respectivement entre chacune des deux résistances par rapport à un potentiel de référence, notamment une màsse, peut être mesurée vers l'extérieur sur les contacts électriques (6, 7, 8, 9, 10), et le composant électrique (31) peut être identifié par une mesure des tensions individuelles.

2. Composant électrique selon la revendication 1,
**caractérisé en ce que**
les valeurs des résistances du réseau de résistances sont choisies par échelonnements, des valeurs de tension peuvent être mesurées uniquement jusqu'à la valeur de la tension de référence, et les zones de tolérance des valeurs de tension sont respectivement disjointes.

3. Composant électrique selon l'une des revendications précédentes,
**caractérisé en ce que**
le composant électrique présente pour une tension de référence une entrée (6) reliée au réseau de résistances (11).

4. Procédé d'identification d'un composant électrique (31), selon lequel dans une première étape de procédé une unité d'exploitation (1) est connectée par des contacts électriques à un composant électrique disposant d'un réseau de résistances,
**caractérisé en ce qu'**
une tension de référence électrique est appliquée respectivement à plusieurs potentiomètres situés dans le composant électrique, une tension adjacente sur les résistances des potentiomètres est mesurée par l'unité d'exploitation, et
une information est enregistrée par l'unité d'exploitation en fonction des tensions mesurées, ce qui permet une identification du composant électrique.

5. Procédé selon la revendication 4,
**caractérisé en ce qu'**
un code numérique est attribué à une tension mesurée par un convertisseur analogique-numérique, lequel code est utilisé pour l'identification ultérieure du composant électrique.

6. Procédé selon la revendication 5,
**caractérisé en ce que**
le code numérique obtenu par le convertisseur analogique-numérique est envoyé à une interface de transmission et est enregistré par une sortie de données.

7. Procédé selon l'une des revendications 5 et 6,
**caractérisé en ce que**
le code numérique est redirigé vers une première unité de calcul, qui peut accéder à une première unité de mémoire, dans laquelle une affectation du signal de sortie est distribuée pour un dispositif défini, et la première unité de calcul est transférée vers une sortie de données et/ou une unité de sortie qui présente un certain dispositif.

8. Procédé selon l'une des revendications 5 à 7,
**caractérisé en ce que**
le code numérique est redirigé vers une seconde unité de calcul qui accède à une seconde unité de mémoire, de laquelle des données sont chargées par l'unité de calcul pour l'exploitation de l'appareil électrique.

9. Procédé selon l'une des revendications 4 à 8,
**caractérisé en ce que**
la tension de référence est mise à disposition par l'unité d'exploitation.

10. Procédé selon l'une des revendications 4 à 9,
**caractérisé en ce que**
pour la tension de référence, une tension continue est utilisée.

11. Procédé selon l'une des revendications 4 à 10,
**caractérisé en ce que**
le rapport de la tension mesurée sur une résistance par rapport à la tension de référence est donné par le rapport des résistances dans le potentiomètre.

12. Unité d'exploitation (1) mettant en application le procédé selon l'une des revendications 4 à 11, comprenant un convertisseur analogique-numérique (2), une entrée de données et au moins une sortie de données,
**caractérisée en ce que**
l'unité d'exploitation (2) est reliée par l'entrée de données à un composant électrique (31) par des contacts électriques (7, 8, 9, 10), et un code numérique peut être attribué par le convertisseur analogique-numérique (2) des tensions mesurées.

13. Unité d'interprétation selon la revendication 12,
**caractérisée en ce que**
dans l'unité d'exploitation (1), une source de tension (5) est prévue pour la tension de référence.

14. Unité d'exploitation selon l'une des revendications 12 et 13,
**caractérisée en ce que**
l'unité d'exploitation (1) est prévue avec une unité de calcul (20) et une unité de mémoire (21) par laquelle le code numérique peut être attribué à un type du dispositif (11) distribué auparavant dans l'unité de mémoire.

15. Unité d'interprétation selon l'une des revendications 12 à 14,
**caractérisée en ce que**
une unité d'affichage (22) est raccordée à l'unité d'exploitation (1), laquelle peut être commandée par l'unité de calcul (20) et peut afficher sur celle-ci le type du dispositif qui peut être identifié.

16. Unité d'interprétation selon l'une des revendications 12 à 15,
**caractérisée en ce que**
l'unité d'exploitation est reliée à une seconde unité de calcul (44) qui est reliée à une seconde unité de mémoire (43), de laquelle des données peuvent être chargées pour l'exploitation de l'appareil électrique (31) en fonction du code numérique obtenu par l'unité d'exploitation (1).
